(19)

Europäisches Patentamt
European Patent Office
Office européen des brevets

(11) **EP 1 134 592 B1**

(12) **EUROPÄISCHE PATENTSCHRIFT**

(45) Veröffentlichungstag und Bekanntmachung des Hinweises auf die Patenterteilung:
**20.01.2010 Patentblatt 2010/03**

(51) Int Cl.:
*G01S 13/524* (2006.01)     *G01S 13/44* (2006.01)

(21) Anmeldenummer: **01105998.7**

(22) Anmeldetag: **10.03.2001**

(54) **Realzeit STAP-Filter zur Festzielunterdrückung**

Real time STAP filter for fixed target cancellation

Filtre STAP temps réel pour suppression de cible fixe

(84) Benannte Vertragsstaaten:
**AT BE CH CY DE DK ES FI FR GB GR IE IT LI LU MC NL PT SE TR**

(30) Priorität: **13.03.2000 DE 10012411**

(43) Veröffentlichungstag der Anmeldung:
**19.09.2001 Patentblatt 2001/38**

(73) Patentinhaber: **EADS Deutschland GmbH**
**81663 München (DE)**

(72) Erfinder:
• **Bickert, Bernhard**
**89079 Ulm (DE)**
• **Meyer-Hilberg, Jochen, Dr.**
**89275 Elchingen (DE)**

(74) Vertreter: **Meel, Thomas**
**c/o Dornier GmbH**
**Patentabteilung**
**88039 Friedrichshafen (DE)**

(56) Entgegenhaltungen:
**US-A- 5 748 143    US-A- 5 907 302**

• **ENDER J H G: "The airborne experimental multi-channel SAR-system AER-II" EUSAR '96. EUROPEAN CONFERENCE ON SYNTHETIC APERTURE RADAR, PROCEEDINGS OF EUSAR '96. EUROPEAN CONFERENCE ON SYNTHETIC APERTURE RADAR, KONIGSWINTER, GERMANY, 26-28 MARCH 1996, Seiten 49-52, XP000998667 1996, Berlin, Germany, VDE-Verlag, Germany ISBN: 3-8007-2162-7**
• **BIGHAM JR J D: "A HIGHLY PARALLEL SIGNAL PROCESSOR" PROCEEDINGS OF THE NATIONAL AEROSPACE AND ELECTRONICS CONFERENCE. (NAECON),US,NEW YORK, IEEE, 21. Mai 1990 (1990-05-21), Seiten 77-82, XP000301967**

**Beschreibung**

Die Erfindung betrifft ein Verfahren zur Berechnung der Koeffizienten eines STAP-Filters und zur Filterung von Radar-Rohdaten der Entfernungs-Doppler-Matrizen zweier benachbarter Empfangskanäle mittels Space-Time Adaptive Processing STAP.

Radar-Rohdaten bestehen aus einer Mischung von Signalen (z.B.: Echos von bewegten und feststehenden Zielen) und Störungen (z.B.: Rauschen). In der Regel sollen bei der Auswertung dieser Radar-Rohdaten die Störungen unterdrückt werden, so daß die Signale gut detektierbar sind.

Zur Verbesserung der Detektion von bewegten Zielen zum Beispiel in SAR-Bildern ist es notwendig Störungen als auch Signale, welche von feststehenden Zielen stammen, zu unterdrücken. Ein geeignetes Verfahren hierfür ist das Space-Time-Adaptive-Processing (STAP). Bei den hierzu bekannten Verfahren werden die Radar-Rohdaten in der Regel im Zeitbereich gefiltert.

In der US 5,907,302 wird ein Verfahren zur Verarbeitung von Radardaten beschrieben, das ein STAP-Verfahren durchführt. Es handelt sich dabei um ein einkanaliges Verfahren, das nur Radardaten eines einzigen Empfangskanals verarbeitet.

Die Aufgabe der Erfindung ist es im Rahmen der STAP Verarbeitung die Filterkoeffizienten und die Filterung der Radar-Rohdaten der Entfernungs-Doppler-Matrizen $\vec{X}_{links}$ und $\vec{X}_{rechts}$ zweier Empfangskanäle auf einfache Art und Weise zu berechnen und durchzuführen, so daß ein Einsatz dieses STAP-Filters in Realzeit-Systemen ermöglicht wird.

Die Aufgabe wird dadurch gelöst, daß im Gegensatz zu konventionellen STAP-Filtern die Berechnung der Koeffizienten und die Filterung ausschließlich im Frequenzbereich durchgeführt werden. Ähnlich der 'schnellen Faltung' ergibt sich damit ein erheblicher Vorteil hinsichtlich der benötigten Prozessorleistung.

Die theoretische Grundlage für das erfindungsgemäße Verfahren bildet die Tatsache, daß bei typischen SAR-Rohdaten im Signalspektrum zweier benachbarter Kanäle die Dopplerfrequenz und die Phasendifferenz korreliert sind.

Figur 1 zeigt die geometrischen Verhältnisse zwischen zwei benachbarten Antennen ('linker' Kanal und 'rechter' Kanal) sowie einem Festziel.

Figur 2 zeigt beispielhaft die Korrelation der Signalspektren zweier benachbarter Kanäle bezüglich der Dopplerfrequenz und der Phasendifferenz.

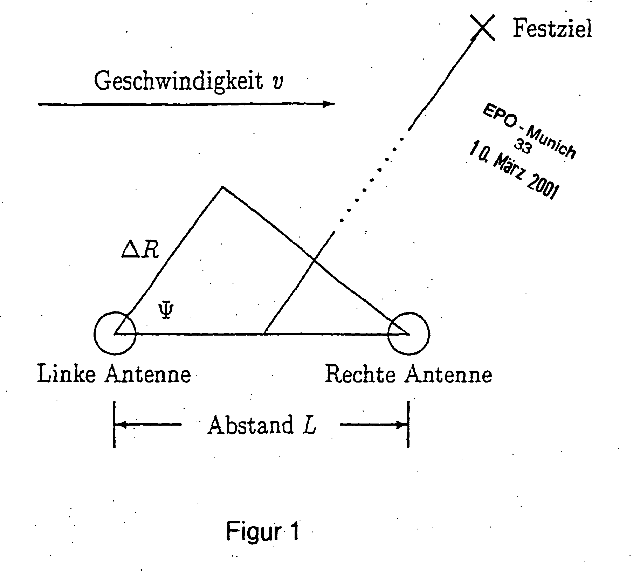

Es ist bekannt, daß sich die Dopplerfrequenz in Bezug auf die in Figur 1 aufgezeigten geometrischen Verhältnisse zwischen zwei benachbarten Antennen 1 und 2 und einem Festziel 3 nach Gleichung 1 wie folgt bestimmen läßt:

$$f_D = \frac{2v}{\lambda}\cos\Psi \qquad\qquad \text{Gl. 1}$$

Dabei ist $v$ die Geschwindigkeit der Radarantennen, $\lambda$ die Wellenlänge des Radarsignals und $\Psi$ der Azimutwinkel, unter dem ein Ziel gesehen wird, wobei sich das Ziel selber nicht bewegt.

Folgender Zusammenhang läßt sich nun verwenden, um eine Beziehung zwischen Dopplerfrequenz und Phasendifferenz abzuleiten:

$$\cos\Psi = -\frac{\Delta R}{L} \qquad\qquad \text{Gl. 2}$$

Dabei ist $L$ der Antennenabstand und $\Delta R$ der Range-Unterschied zwischen rechtem und linkem Signal, aus dem sich die Phasendifferenz $\Delta\varphi$ zwischen rechtem und linkem Signal bestimmen läßt:

$$\Delta\varphi = -\frac{2\pi \cdot \Delta R}{\lambda} + n \cdot 2\pi \qquad \text{mit } n \text{ so, daß } -\pi < \Delta\varphi \leq \pi \qquad\qquad \text{Gl. 3}$$

Einsetzen der Gleichungen 1 und 2 sowie Substitution von $2 \cdot \frac{\Delta R}{\lambda}$ in Gleichung 3 ergibt:

$$\Delta\varphi = \frac{\pi \cdot L}{v} f_D + n \cdot 2\pi \qquad \text{mit } n \text{ so, daß } -\pi < \Delta\varphi \leq \pi \qquad \text{Gl. 4}$$

Hierbei gilt es jedoch zu beachten, daß Gleichung 4 nur für den Bereich der Antennenhauptkeule gilt.

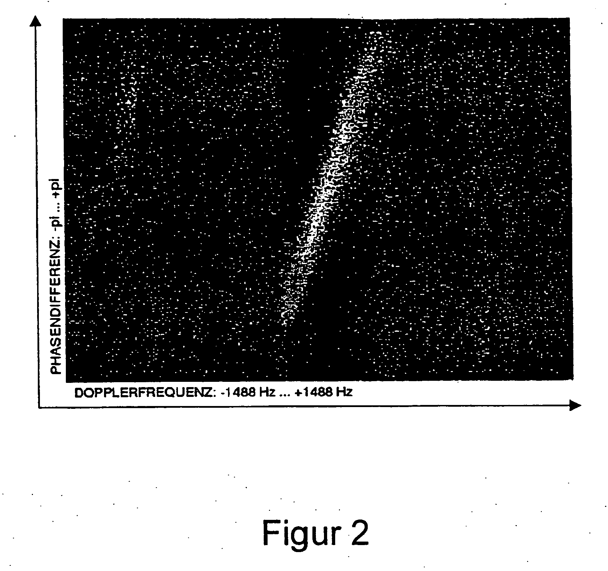

Die Korrelation der Signalspektren zweier benachbarter Kanäle bezüglich der Dopplerfrequenz und der Phasendifferenz ist beispielhaft für einen typischen Datensatz in Figur 2 dargestellt. Im Zentrum der von $\Delta\varphi$ und $f_D$ aufgespannten Fläche, welche bezüglich ihrer Ordinate proportional der azimutalen Ausdehnung der Antennenhauptkeule ist, ist deutlich der lineare Zusammenhang zwischen Dopplerfrequenz (resultierend aus der azimutalen Ablenkung) und der Phasendifferenz $\Delta\varphi$ zu sehen.

Im Rahmen des erfindungsgemäßen Verfahrens läßt sich die Berechnung der Filterkoeffizienten sowie die Filterung der Radar-Rohdaten im Frequenzbereich in drei Schritte gliedern. In einem ersten Schritt werden gewichtete Mittelwerte $\overline{\Delta\varphi(l)}$ der Phasendifferenzen $\Delta\varphi(k,l)$ über alle Entfernungstore $k$ aus $\vec{X}_{links}$ und $\vec{X}_{rechts}$ bestimmt. Hierbei gilt es eine geeignete Auswahl von n Azimut-Zellen $l$ zu treffen, welche von der Breite der Antennenhauptkeule abhängig zu machen ist. In vorteilhafter Weise wird die Auswahl geeigneter Azimut-Zellen $l$ so gestaltet, daß der selektierte Bereich auf den Bereich beschränkt ist, für welchen der lineare Zusammenhang zwischen Dopplerfrequenz und Phasendifferenz, wie in Figur 2 dargestellt, gilt.

Dieser Bereich ist dadurch gekennzeichnet, daß der Betrag der Kreuzkorrelation der Antennencharakteristik größer gleich einem geeigneten Schwellwert ist.

Es ist darauf zu achten, daß die Leistung $P(k,l)$ der Radar-Rohdaten auf geeignete Weise zur Gewichtung der Werte von $\Delta\varphi(k,l)$ zur Geltung kommt. In vorteilhafter Weise kann die Leistung $P(k,l)$ zur Gewichtung von $\Delta\varphi(k,l)$ in der Art verwendet werden, daß für jede der $N$ ausgewählten Spalten von $\vec{X}_{links}$ und $\vec{X}_{rechts}$ die Kreuzkorrelation berechnet wird und die Summe über alle Korrelationswerte bei Berechnung der Phasendifferenz $\overline{\Delta\varphi(l)}$ verwendet wird.

Durch geeignete Addition bzw. Subtraktion einer zu ermittelnden Konstanten sind die Werte von $\overline{\Delta\varphi(l)}$ im Bereich von $-\pi$ und $+\pi$ zu halten. Diese Konstante ist dahingehend zu ermitteln, daß die Funktion der Phasendifferenzen $\overline{\Delta\varphi(l)}$ im Bereich von $-\pi$ und $+\pi$ monoton steigt.

In einem zweiten Schritt werden die Parameter einer Regressionsgeraden bestimmt, welche die Korrelation zwischen Dopplerfrequenz und Phasendifferenz näherungsweise beschreiben. Dies wird durch Auswertung des funktionalen Zusammenhangs von $\overline{\Delta\varphi(l)}$ ($l$) erreicht. Als Methode zur Schätzung der Parameter der Regressionsgeraden kann beispielsweise die Lineare Regression angewandt werden, bei welcher die Summe aller Fehlerquadrate minimiert wird. Als Ergebnis erhält man die beiden Parameter der Regressionsgeraden Steigung $m$ und Offset $b$, welche im nachfolgenden Verfahrensschritt als die die Korrelation zwischen Phasendifferenz und Dopplerfrequenz beschreibenden Größen betrachtet werden.

Bei der eigentlichen Filterung der Radar-Rohdaten der Entfernungs-Doppler-Matrizen $\vec{X}_{links}$ und $\vec{X}_{rechts}$ sind zwei Fälle zu unterscheiden. Der erste Fall bezieht sich auf die n Azimuth-Zellen bzw. -Bereiche $l$, welche bezogen auf die Breite der Hauptkeule im ersten Verfahrensschritt ausgewählt wurden. Hier werden die Phasendrehungen der Radar-Rohdaten in $\vec{X}_{rechts}$ gegenüber denen in $\vec{X}_{links}$ korrigiert und zur Bildung von $\vec{Y}_{clutterfrei}$ gemäß Gleichung 5 herangezogen:

$$\vec{Y}_{clutterfrei}(k,l) = \vec{X}_{links}(k,l) - \vec{X}_{rechts}(k,l) \cdot e^{-j(m \cdot l + b)} \qquad \text{Gl.5}$$

Der zweite Fall bezieht sich auf alle anderen Azimuth-Zellen bzw. -Bereiche $l$. Dabei werden die beiden Matrizen $\vec{X}_{links}$ und $\vec{X}_{rechts}$ einfach kohärent entsprechend Gleichung 6 addiert:

$$\vec{Y}_{clutterfrei}(k,l) = \vec{X}_{links}(k,l) + \vec{X}_{rechts}(k,l) \qquad Gl.6$$

In vorteilhafter Weise zeigt sich bei der Verwendung des erfindungsgemäßen Verfahrens, daß bewegte Ziele innerhalb der Antennenhauptkeule, deren Echos aber außerhalb der Antennenhauptkeule erscheinen, kohärent verstärkt werden. Bewegtziele in der Mitte der Antennenhauptkeule werden dabei bis zu 6dB in ihrer Intensität angehoben.

**Patentansprüche**

1. Verfahren mittels Space-Time Adaptive Processing STAP zur Berechnung der Koeffizienten eines STAP-Filters und zur Filterung von Radar-Rohdaten der Entfernungs-Doppler-Matrizen $\vec{X}_{links}$ und $\vec{X}_{rechts}$ zweier benachbarter Empfangskanäle,

   wobei die Berechnung der Koeffizienten und die Filterung im Frequenzbereich stattfinden, und daß als Ergebnis der Filterung auf Grundlage von $\vec{X}_{links}$ und $\vec{X}_{rechts}$ eine Entfernungs-Doppler-Matrix $\vec{Y}_{clutterfrei}$ entsteht, bei welcher die Echos fester Ziele unterdrückt und die Echos bewegter Ziele kohärent verstärkt sind, wobei $\vec{X}_{clutterfrei}$ folgendermaßen ermittelt wird:

   - in einem ersten Schritt werden Mittelwerte $\overline{\Delta\varphi}(l)$ der mit der Leistung $P(k,l)$ gewichteten Phasendifferenzen $\Delta\varphi(k,l)$ über alle Entfernungstore k aus $\vec{X}_{links}$ und $\vec{X}_{rechts}$ bestimmt, wobei die Auswahl von $n$ geeigneten Azimut-Zellen $l$ von der Breite der Antennenhauptkeule abhängig gemacht wird und wobei durch Addition bzw. Subtraktion einer Konstanten die Werte von $\Delta\varphi(l)$ im Bereich von $-\pi$ und $+\pi$ gehalten werden, wobei diese Konstante derart ausgewählt wird, dass die Funktion $\overline{\Delta\varphi}(l)$ im Bereich von $-\pi$ und $+\pi$ monoton steigt,
   - in einem zweiten Schritt werden die Parameter einer Regressionsgeraden bestimmt, welche als Ausgleichsgerade in Näherung die Korrelation zwischen Dopplerfrequenz und Phasendifferenz in $\overline{\Delta\varphi}(l)$ beschreibt, wobei man als Ergebnis die beiden Parameter der Geraden Steigung $m$ und Offset $b$ erhält,
   - und in einem dritten Schritt werden die Eingangssignale im Frequenzbereich gefiltert, wobei die zwei Fälle zu unterscheiden sind,

   1.) innerhalb der n Azimut-Zellen bzw. -Bereiche $l$, welche bezogen auf die Breite der Hauptkeule im ersten Verfahrensschritt ausgewählt wurden, werden die Phasendrehungen der Rohdaten in $\vec{X}_{rechts}$ gegenüber denen in $\vec{X}_{links}$ korrigiert und zur Bildung von $\vec{Y}_{clutterfrei}$ herangezogen, gemäß:

$$\vec{Y}_{clutterfrei}(k,l) = \vec{X}_{links}(k,l) - \vec{X}_{rechts}(k,l) \cdot e^{-j(m \cdot l + b)}$$

   2.) bei allen anderen Azimut-Zellen bzw. -Bereiche $l$, werden die beiden Matrizen $\vec{X}_{links}$ und $\vec{X}_{rechts}$ einfach addiert, gemäß:

$$\vec{Y}_{clutterfrei}(k,l) = \vec{X}_{links}(k,l) + \vec{X}_{rechts}(k,l)$$

2. Verfahren nach Anspruch 1, **dadurch gekennzeichnet, daß** bei der Bestimmung der Koeffizienten zur Filterung die Korrelation zwischen Dopplerfrequenz und Phasendifferenz der Rohdaten bezüglich $\vec{X}_{links}$ und $\vec{X}_{rechts}$ ausgenutzt wird.

3. Verfahren nach Anspruch 1 oder 2, **dadurch gekennzeichnet, daß** die Auswahl geeigneter Azimut-Zellen $l$ so gestaltet wird, daß sie auf den Bereich der Antennenhauptkeule beschränkt ist, für welchen der lineare Zusammenhang zwischen Dopplerfrequenz und Phasendifferenz gilt.

4. Verfahren nach Anspruch 3, **dadurch gekennzeichnet, daß** die Auswahl geeigneter Azimut-Zellen $l$ so gestaltet wird, daß sie auf den azimutalen Bereich der Antennenhauptkeule beschränkt ist, in welchem der Betrag der Kreuzkorrelierten der Antennencharakteristik größer gleich einem geeigneten Schwellwert ist.

**5.** Verfahren nach einem der Ansprüche 3 bis 5, **dadurch gekennzeichnet, daß** die Leistung $P(k,l)$ zur Gewichtung von $\Delta\varphi(k,l)$ in der Art verwendet wird, daß für jede der n ausgewählten Spalten von $\vec{X}_{links}$ und $\vec{X}_{rechts}$ die Kreuzkorrelation berechnet wird und die Summe über alle Korrelationswerte als Eintrag in $\overline{\Delta\varphi}(l)$ verwendet wird.

**6.** Verfahren nach einem der vorangehenden Ansprüche, **dadurch gekennzeichnet, daß** als Methode zur Schätzung der Parameter der Regressionsgeraden die Lineare Regression angewandt wird, bei welcher die Summe aller Fehlerquadrate minimiert wird.

**Claims**

**1.** Method by means of space-time adaptive processing STAP for calculation of the coefficients of an STAP filter and for filtering of raw radar data from the range-Doppler matrices $\overline{X}_{left}$ and $\overline{X}_{right}$ *from* two adjacent reception channels, wherein the calculation of the coefficients and the filtering are carried out in the frequency domain, and wherein a range-Doppler matrix $\overline{Y}_{clutter\text{-}free}$ is produced as a result of the filtering on the basis of $\overline{X}_{left}$ and $\overline{X}_{right}$ in which the echoes from stationary targets are suppressed and the echoes from moving targets are amplified coherently, where $\overline{Y}_{clutter\text{-}free}$ is determined as follows:

- in a first step, mean values $\overline{\Delta\varphi}(l)$ of the phase differences $\Delta\varphi(k,l)$ weighted with the power $P(k,l)$ are determined over all range gates k from $\overline{X}_{left}$ and $\overline{X}_{right}$ wherein the selection of n suitable azimuth cells $l$ is made dependent on the width of the antenna main lobe, and wherein the values of $\overline{\Delta\varphi}(l)$ are kept in the range from $-\pi$ to $+\pi$ by addition or subtraction of a constant, wherein this constant is chosen such that the function $\overline{\Delta\varphi}(l)$ rises monotonally in the range from $-\pi$ to $+\pi$,
- in a second step, the parameters of a linear regression line are determined which describes the approximate correlation between the Doppler frequency and the phase difference in $\overline{\Delta\varphi}(l)$ as a linear regression line, the two parameters of the straight line, gradient m and offset b, being obtained as the result,
- and, in a third step, the input signals are filtered in the frequency domain, with distinction being drawn between the current two cases,

1.) within the *n* azimuth cells and areas *l* which were selected in the first method step with respect to the width of the main lobe, the phase shifts of the raw data in $\overline{X}_{right}$ with respect to those in $\overline{X}_{left}$ are corrected and are used to form $\overline{Y}_{clutter\text{-}free}$, as follows:

$$\vec{Y}_{\text{clutter-free}}(k,l) = \vec{X}_{\text{left}}(k,l) - \vec{X}_{\text{right}}(k,l) \cdot e^{-j(m\cdot l + b)}$$

2.) for all the other azimuth cells and areas *l*, the two matrices $\overline{X}_{left}$ and $\overline{X}_{right}$ are simply added, as follows:

$$\vec{Y}_{\text{clutter-free}}(k,l) = \vec{X}_{\text{left}}(k,l) + \vec{X}_{\text{right}}(k,l)$$

**2.** Method according to Claim 1, **characterized in that** the correlation between the Doppler frequency and phase difference in the raw data relating to $\overline{X}_{left}$ and $\overline{X}_{right}$ is used to determine the coefficients for filtering.

**3.** Method according to Claim 1 or 2, **characterized in that** suitable azimuth cells *l* are chosen in such a way that the choice is restricted to that area of the antenna main lobe for which the linear relationship between the Doppler frequency and the phase difference is valid.

**4.** Method according to Claim 3, **characterized in that** suitable azimuth cells *l* are chosen in such a way that the choice is restricted to that azimuth area of the antenna main lobe in which the magnitude of the cross-correlation of the antenna characteristic is greater than or equal to a suitable threshold value.

**5.** Method according to one of Claims 3 to 5, **characterized in that** the power $P(k,l)$ is used for weighting $\Delta\varphi(k,l)$ in such a way that the cross-correlation is calculated for each of the n chosen columns of $\overline{X}_{left}$ and $\overline{Y}_{right}$, and the sum over all the correlation values is used as an entry in $\overline{\Delta\varphi}(l)$.

6. Method according to one of the preceding claims, **characterized in that** linear regression, in which the sum of all the square errors is minimized, is used as the method for estimation of the parameters of the linear regression line.

**Revendications**

1. Procédé de calcul au moyen de Space-Time Adaptative Processing STAP des coefficients d'un filtre STAP et de filtrage des données radar brutes des matrices Doppler de distances $\dot{X}_{\text{gauche}}$ et $\dot{X}_{\text{droite}}$ de deux canaux de réception voisins,

   dans lequel le calcul des coefficients et le filtrage ont lieu dans le domaine fréquentiel, et le filtrage basé sur $\dot{X}_{\text{gauche}}$

   et $\dot{X}_{\text{droite}}$ fournit comme résultat une matrice Doppler de distances $\dot{Y}_{\text{sansclutter}}$, dans laquelle les échos des cibles fixes sont supprimés et les échos des cibles mobiles subissent une amplification cohérente,

   dans lequel $\dot{Y}_{\text{sansclutter}}$ est élaboré de la manière suivante :

   - dans une première étape, à partir de $\dot{X}_{\text{gauche}}$ et $\dot{X}_{\text{droite}}$, on détermine des valeurs moyennes $\overline{\Delta\varphi}(l)$ des différences de phases $\Delta\varphi(k, l)$ pondérées par la puissance P(k,1) sur l'ensemble des portes de distances k, dans laquelle le choix de $n$ cellules d'azimuts 1 appropriées est rendu dépendant de la largeur du lobe principal de l'antenne et dans laquelle les valeurs de $\overline{\Delta\varphi}(l)$ sont maintenues dans la plage de -π à +π par addition, respectivement soustraction d'une constante, et dans laquelle cette constante est choisie de telle sorte que la fonction $\overline{\Delta\varphi}(l)$ soit croissante de manière monotone dans la plage de -π à +π,
   - dans une deuxième étape, on détermine les paramètres d'une droite de régression, qui décrit la corrélation entre fréquence Doppler et différence de phases dans $\overline{\Delta\varphi}(l)$ sous la forme d'une droite d'équilibre des distances, dans laquelle on obtient comme résultat les deux paramètres de la pente de la droite m et du décalage à l'origine b,
   - et dans une troisième étape, on filtre les signaux d'entrée dans le domaine fréquentiel, dans laquelle il faut distinguer les deux cas,

      1.) à l'intérieur des n cellules respectivement plages d'azimut 1, qui étaient sélectionnées dans la première étape du procédé en fonction de la largeur du lobe principal, on corrige les rotations de phases des données brutes dans $\dot{X}_{\text{droite}}$ par rapport à celles dans $\dot{X}_{\text{gauche}}$ et on les utilise pour former $\dot{Y}_{\text{sansclutter}}$ selon :

$$\dot{Y}_{sansclutter}(k, 1) = \dot{X}_{gauche}(k, 1) - \dot{X}_{droite}(k, 1) \cdot e^{-j(m \cdot 1 + b)}$$

      2.) dans toutes les autres cellules respectivement plages d'azimut 1, on additionne simplement les deux matrices $\dot{X}_{\text{gauche}}$ et $\dot{X}_{\text{droite}}$ selon :

$$\dot{Y}_{sansclutter}(k, 1) = \dot{X}_{gauche}(k, 1) + \dot{X}_{droite}(k, 1)$$

2. Procédé selon la revendication 1, **caractérisé en ce que** lors de la détermination des coefficients de filtrage, on tire profit de la corrélation entre fréquence Doppler et différence de phases des données brutes concernant $\dot{X}_{\text{gauche}}$

   et $\dot{X}_{\text{droite}}$.

3. Procédé selon la revendication 1 ou 2, **caractérisé en ce que** le choix de cellules d'azimut 1 appropriées est formé de manière à le limiter à la plage du lobe principal de l'antenne, pour lequel le rapport linéaire entre fréquence Doppler et différence de phases s'applique.

4. Procédé selon la revendication 3, **caractérisé en ce que** le choix de cellules d'azimut 1 appropriées est formé de manière à le limiter à la plage azimutale du lobe principal de l'antenne, dans lequel le niveau des corrélations croisées de caractéristiques de l'antenne est supérieur ou égal à une valeur de seuil appropriée.

5. Procédé selon une des revendications 3 à 5, **caractérisé en ce que** la puissance $P(k,l)$ servant à la pondération de $\Delta\varphi(k,l)$ est utilisée de telle sorte qu'on calcule la corrélation croisée pour chacune des colonnes n sélectionnées de $\overset{\cdot}{X}_{,gauche}$ et $\overset{\cdot}{X}_{,droite}$ et qu'on utilise la somme de toutes les valeurs de corrélation comme entrée dans $\overline{\Delta\varphi}(l)$.

6. Procédé selon une des revendications précédentes, **caractérisé en ce qu'**on utilise la régression linéaire comme méthode pour l'évaluation des paramètres de la droite de régression, dans laquelle on minimise la somme des moindres carrés.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5907302 A